# EUROPEAN PATENT APPLICATION

(11) **EP 2 148 076 A1**
(43) Date of publication of application: **27.01.2010**
(21) Application number: 08425501.7
(22) Date of filing: 24.07.2008
(51) Int. Cl.: F02M 35/10

(54) **Integrated suction manifold provided with a fuel common rail**

(71) Applicant: Magneti Marelli Powertrain S.p.A., 28011 Corbetta (IT)
(72) Inventor: Fornara, Stefano, 41100 Modena (IT); Carta, Stefano, 10024 Moncalieri (IT); Peccora, Michele, 85100 Potenza (IT)
(74) Representative: Bergadano, Mirko

(57) **Abstract**

An integrated suction manifold (4); the suction manifold (4) displays: a body (21), a suction chamber (22), and a number of suction pipes (9), each of which connects the suction chamber (22) to a corresponding cylinder (3) of the internal combustion engine (1); a plurality of fastening brackets (26), each of which rises from a wall (25) of the body (21) and displays a first through hole (28); a plurality of fastening screws (29), to fix the body (21) to the head (2); a fuel common rail (13) and displays a cylindrical tube (30) from which a number of cups (31) adapted to be coupled to a fuel injector (14); and a number of supporting cradles (32), which rise from the wall (25) of the body (21) of the suction manifold (4) and are arranged by the side of the fastening brackets (26) to define a housing seat (33), along with the fastening brackets (26) themselves, adapted to contain fastening brackets (26) and the supporting cradles (32).

## Description

### TECHNICAL FIELD

The present invention relates to an integrated suction manifold provided with a fuel common rail.

### BACKGROUND ART

An internal combustion engine is provided with a number of cylinders, each of which is connected to a suction manifold by means of at least one suction valve and to an exhaust manifold by means of at least one exhaust valve. The suction manifold receives fresh air (i.e. air from the external environment) through a feeding pipe provided with a butterfly valve and is connected to the cylinders by means of corresponding suction pipes, each of which ends at at least one suction valve.

In modern internal combustion engines, the suction manifold is increasingly of variable geometry type, i.e. is provided with a choking device, which varies the air introduction section into the suction pipes according to the engine speed (i.e. to the angular speed of rotation of the drive shaft) to increase the engine performances while reducing the polluting emissions thereof. At low speeds, the air introduction section through the suction pipes is decreased so as to generate turbulences in the aspirated air flow which improve the air and fuel mixing in the cylinders; in virtue of the presence of these turbulences which improve the mixing, all the injected fuel is burnt and thus the polluting emissions generated by the combustion are reduced. At high speeds, the air introduction section through the suction pipes is maximized so as to allow a complete filling of the cylinders and thus to allow the generation of the maximum possible power.

For example, the choking devices of the type described above may be either tumble devices or swirl devices. For each suction pipe, a tumble device uses a choking element movable between an active (or choking) position, in which the choking element reduces the cross section of the suction pipe, and a resting (or maximum opening) position, in which the choking element does not determine any reduction of the air introduction section of the suction pipe. A swirl system provides for each suction pipe comprising two channels and, for each suction pipe, uses a choking element inserted in one of the two channels and movable between the active position, in which the choking element completely closes the corresponding channel, and a resting position (or maximum opening position), in which the choking element does not determine a significant reduction of the air introduction section of the corresponding channel.

During the past years, direct fuel injection combustion engines have become increasingly more widespread; in an engine of this type, the pressurized fuel is fed to a fuel common rail directly connected to a series of injectors (one for each cylinder of the engine), which are cyclically actuated to inject a part of the pressurized fuel present in the common rail directly into the corresponding cylinders. The pressure of the fuel in the common rail is high (currently in the range between 100 and 200 atmospheres in gasoline engines and in the range between 1000 and 2000 atmospheres in diesel engines); in order to ensure the required mechanical strength, in the direct injection engines currently marketed, a common rail entirely made of steel is used, which rests on the body of the suction manifold and which is fixed by means of a plurality of fastening screws which are screwed into threaded holes obtained in the head of the engine thus crossing and fastening both the through holes obtained through the suction manifold, and the through holes obtained through a fastening flange welded to the common rail. However, the construction of the fastening flange and the welding of the fastening flange to the common rail require relatively long and complex machining operations, which considerably increase the overall cost of the common rail.

### DISCLOSURE OF INVENTION

It is the object of the present invention to provide an integrated suction manifold provided with a fuel common rail, which suction manifold is free from the drawbacks described above and, specifically, is easy and cost-effective to be manufactured.

According to the present invention an integrated suction manifold provided with a fuel common rail is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view of an internal combustion engine provided with a suction manifold having a variable geometry, made according to the present invention and provided with a tumble-type choking system;
- figure 2 is a diagrammatic perspective view with parts removed for clarity of a body of the suction manifold in figure 1;
- figures 3 and 4 are two views, a section view and an exploded section view, respectively, of a detail of the body of the suction manifold in figure 2;
- figure 5 is a partially exploded, diagrammatic perspective view with parts removed for clarity of the suction manifold in figure 1;
- figure 6 is an enlarged-scale, side view with parts removed for clarity of a mounting element of the suction manifold in figure 1; and
- figure 7 is a diagrammatic view of an actuator of the tumble-type choking system of the suction manifold in figure 1.

### PREFERRED EMBODIMENTS OF THE INVENTION

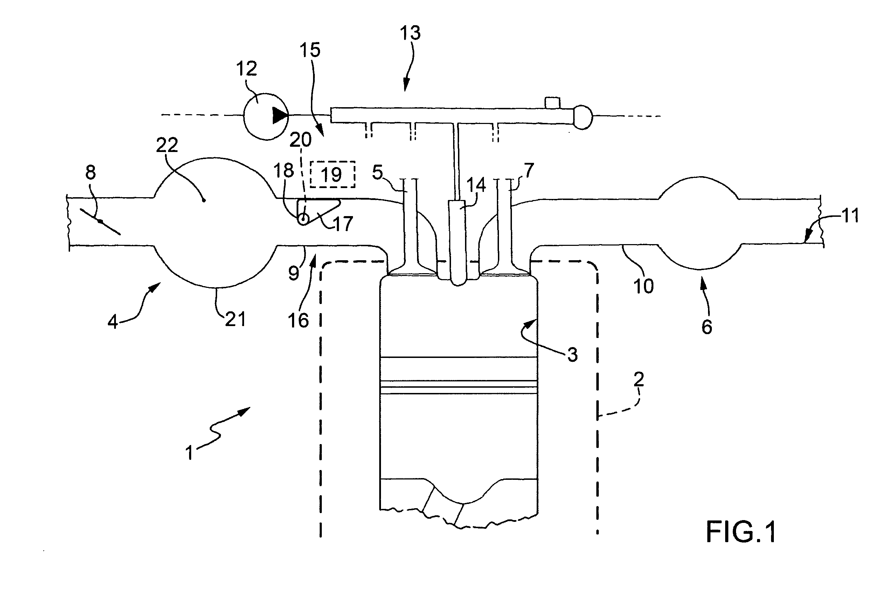

In figure 1, numeral 1 indicates as a whole an internal combustion engine provided with a head 2 in which four cylinders 3 are obtained (only one of which is shown in figure 1), each of which is connected to a suction manifold 4 by means of two suction valves 4 (only one of which is shown in figure 1) and to an exhaust manifold 6 by means of two exhaust valves 7 (only one of which is shown in figure 1).

The suction manifold 4 receives fresh air (i.e. air from the external environment) through a butterfly valve 8 movable between a closing position and a maximum opening position, and is connected to the cylinders 2 by means of corresponding suction pipes 9 (only one of which is shown in figure 1), each of which is adjusted by the corresponding suction valves 4. Similarly, the exhaust manifold 5 is connected to the cylinders 2 by means of corresponding exhaust pipes 10 (only one of which is shown in figure 1), each of which is adjusted by the corresponding exhaust valves 6; an emission pipe 11 (partially shown), for releasing the gases produced by combustion into the atmosphere, departs from the exhaust manifold 5.

A low pressure pump (not shown) feeds the fuel (e.g. gasoline, diesel, methane or LPG) from a tank (not shown) to a high pressure pump 12, which in turn feeds the fuel to a common rail 13; a series of injectors 14 (one for each cylinder 3) is connected to the common rail 13, each of which is cyclically actuated to inject a part of the pressurized fuel present in the common rail 13 into the corresponding cylinder 3.

The suction manifold 4 is of variable geometry and comprises a choking system 15, which varies the air introduction section of the suction pipes 9 according to the speed of the engine 1 itself. According to the embodiment shown in figure 1, the choking system 13 is of the tumble type and for each suction pipe 9 comprises a choking valve 16, which displays a choking element 15 fitted on a shaft 18 to rotate under the bias of an actuator device 19 about a rotation axis 20 transversally arranged to the corresponding suction pipe 9. In use, each choking element 17 rotates under the bias of the actuator device 19 between an active position, in which the choking element 17 reduces the air introduction section of the suction pipe 9, and a resting position, in which the choking element 17 does not determine any appreciable reduction of the air introduction section of the suction pipe 9.

According to a different embodiment (not shown), the choking system 15 is of the swirl type; in this case, each suction pipe 9 is split into two parallel channels side-by-side and the choking system 15 comprises for each suction pipe 9 a choking valve 16, which is mounted along one of the two channels of the suction pipe 9 and is adapted to vary the air introduction section thorough the channel itself. Specifically, each choking valve 16 is movable between an active (or choking) position in which the choking valve 16 reduces the air introduction section of the suction pipe 9 by completely closing the corresponding channel, and a resting (or maximum opening) position, in which the choking valve 16 does not determine a significant reduction of the air introduction section of the suction pipe 9.

Preferably, a single, common actuator device 19 is provided, which is mechanically connected to all the choking bodies 17 of the four choking valves 16; specifically, the choking bodies 17 of the four choking valves 16 are fitted on a same common shaft 18 which receives the motion from the actuator device 19.

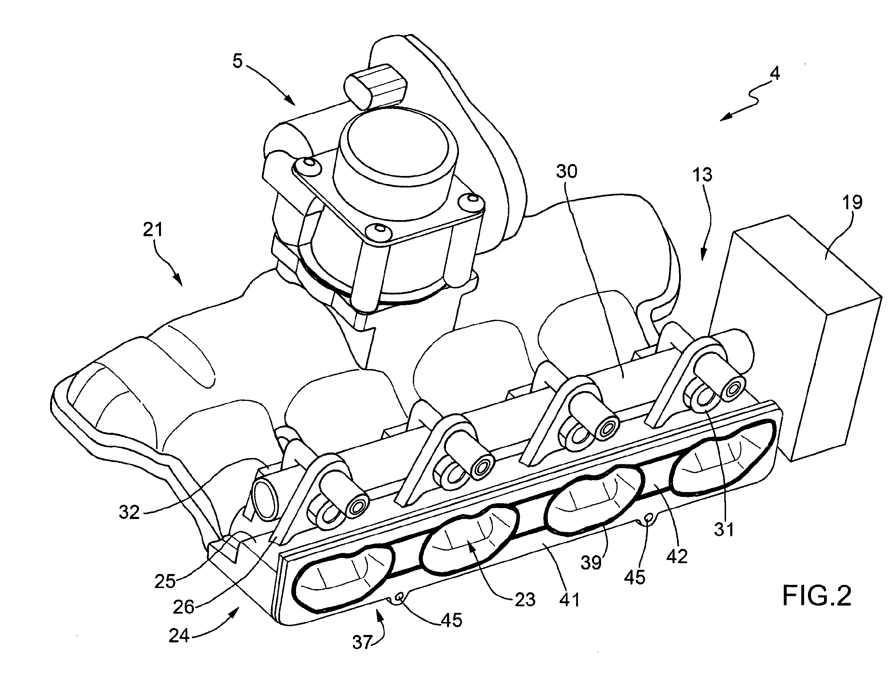

As shown in figure 2, the suction manifold 4 comprises a body 21 which is made of injection molded plastic material. A tubular suction chamber 22 which receives fresh air from the external environment through the butterfly valve 8 is obtained in the body 21 of the suction manifold 4; furthermore, four suction pipes 9 are obtained in the body 21 of the suction manifold 4, each of which connects the suction chamber 22 to a corresponding cylinder 3 of the internal combustion engine 1 and ends with an outlet mouth 23 at a connecting flange 24 adapted to be coupled to the head 2 of the internal combustion engine 1.

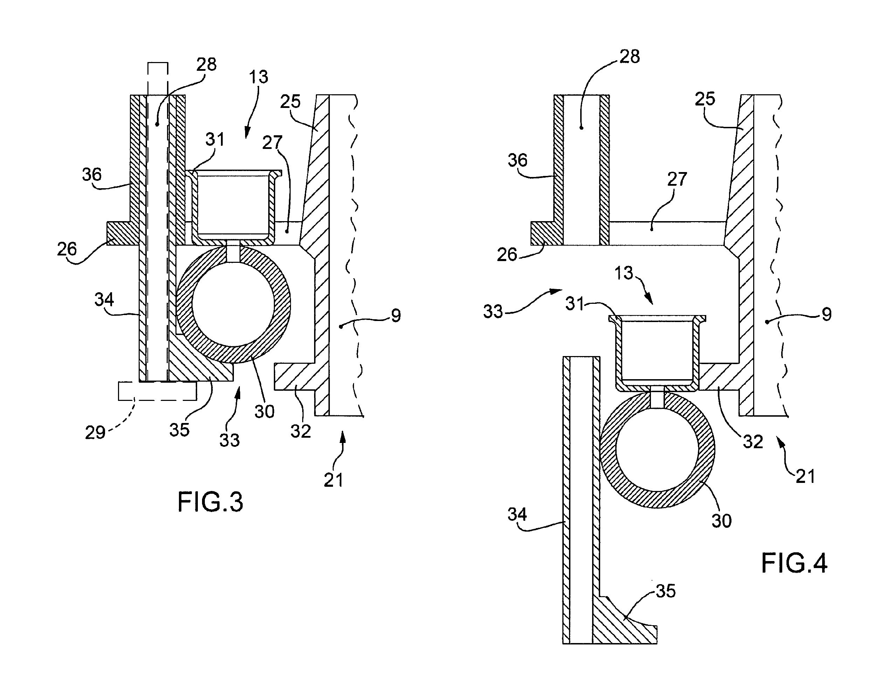

As shown in figures 2, 3 and 4, four fastening brackets 26 rise from a wall 25 of the body 21 of the suction manifold 4, each of which is perpendicularly arranged to the wall 25 and displays a circular-section, internal through hole 27 and a circular-section, external through hole 28 having a smaller diameter than the internal hole 27. In order to fix the body 21 of the suction manifold 4 to the head 2 of the internal combustion engine 1, a fastening screw 29 is inserted through the external hole 28 of each fastening bracket 26, which screw is screwed into a corresponding threaded blind hole (not shown) obtained through the head 2 of the internal combustion engine 1.

The fuel common rail 13 displays a metal cylindrical tube 30 from which four cups 31 rise, each of which is adapted to be coupled with a fuel injector 14 of the internal combustion engine 1; the tube 30 of the fuel common rail 13 is supported by the body 21 of the suction manifold 4 by means of four supporting cradles 32, which perpendicularly rise from the wall 25 of the body 21 of the suction manifold 4 and are arranged by the side of the fastening brackets 26 to define, along with the fastening brackets 26 themselves, a housing seat 33 adapted to contain the fuel common rail 13 which is arranged between the fastening brackets 26 and the supporting cradles 32. According to a preferred embodiment shown in the accompanying figures, each supporting cradle 32 faces a corresponding mounting bracket 26; according to a different embodiment (not shown), each supporting cradle 32 is arranged between two corresponding mounting brackets.

According to a preferred embodiment shown in the accompanying figures, the external through holes 28 of the fastening brackets 26 are spaced from the wall 25 of the body 21 of the suction manifold 4 so that the fuel common rail is secured between the wall 25 of the body 21 of the suction manifold 4 and the fastening screws 29.

Furthermore, according to a preferred embodiment shown in the accompanying figures, the fastening brackets 26 are arranged at the cups 31 of the fuel common rail 13; in each fastening bracket 26, the internal through hole 27 is arranged between the wall 25 of the body 21 of the suction manifold 4 and the external through hole 28 and is adapted to contain a cup 31 of the fuel common rail 13. According to a different embodiment (not shown), the fastening brackets 26 are arranged between the cups 31 of the fuel common rail 13 and thus the fastening brackets 26 are free from the internal through holes 27.

As previously mentioned, the body 4 of the suction manifold 4 is made of molded plastic material; in order to avoid collapsing under load, the external through hole 28 of each fastening bracket 26 is coated by a metal anti-collapsing bushing 34. According to a preferred embodiment shown in the accompanying figures, the metal anti-collapsing bushing 34 of each fastening bracket 26 protrudes from the external through hole 28 and extends outside the external through hole 28 towards the supporting cradle 32. In this embodiment, the metal anti-collapsing bushing 34 of each fastening bracket 26 has an "L"-shape and is provided with an elbow extension 35 arranged parallel to and facing the supporting cradle 32 to contribute to form the housing seat 33 adapted to contain the common rail 13; furthermore, each fastening bracket 26 displays a tubular extension 36, which is internally coated by the metal anti-collapsing bushing 34, is coaxially arranged to the external through hole 28 and forms an extension of the external through hole 28 on the side opposite to the supporting cradle 32. According to a different embodiment (not shown), each metal anti-collapsing bushing 34 does not protrude from the external hole 28 towards the supporting cradle 32.

The housing seat 33 defined between the supporting cradles 32 and the fastening brackets 26 and further delimited by the metal anti-collapsing bushings 34 is dimensioned to accommodate the fuel common rail 13 with the minimum possible clearance; in this manner, once the fuel common rail 13 has been arranged in the housing seat 33, the fuel common channel 13 itself is firmly coupled to the body 21 of the suction manifold 4.

It is worth noting that in the embodiment shown in the accompanying figures in which the metal anti-collapsing bushings 34 protrude from the external through holes 28 and extend outside the external through holes 28 towards the supporting cradles 32, the metal anti-collapsing bushings 34 themselves may be inserted into the external through holes 28 once the fuel common rail 13 has been arranged in the housing seat 33; in this manner, the insertion of the metal anti-collapsing bushings 34 into the external through holes 28 blocks the fuel common rail 13 in the housing seat 33.

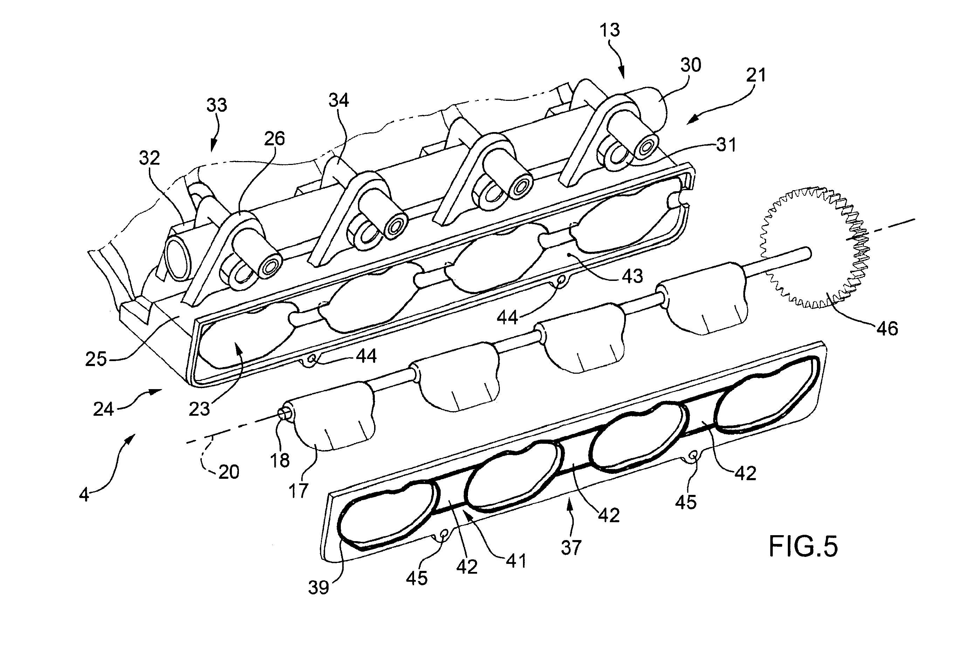

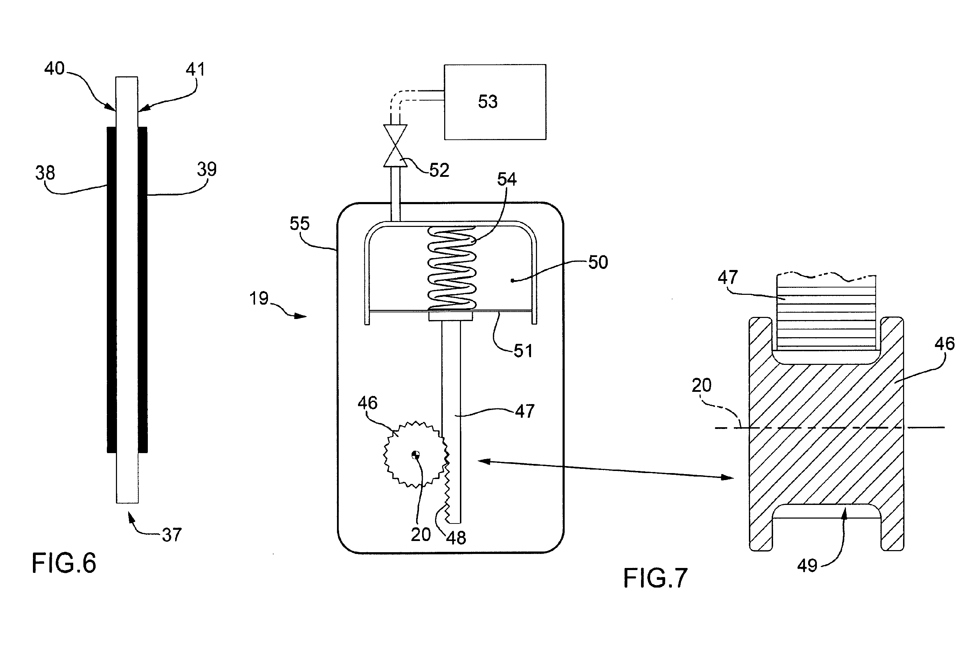

As shown in figure 5, a mounting element 37 is provided, which displays a rectangular shape and is fixed to the connecting flange 24 so as to be arranged between the connecting flange 24 and the head 2 of the internal combustion engine 1 and integrates an internal annular seal 38 arranged towards the connecting flange 24 and an external annular seal 39 arranged towards the head 2 of the internal combustion engine 1. In other words, as shown in figure 6, the mounting element 37 has a flat shape displaying and internal surface supporting the internal annular seal 38, and an external surface 41 which is parallel and opposite to the internal surface 40 and supporting the annular external seal 39.

According to a preferred embodiment, the mounting element 37 is made of injection-molded plastic material and the annular seals 38 and 39 are overmoulded on the mounting element 37 on the opposite sides of the mounting element 37 itself.

As shown in figure 5, mounting element 37 supports a number of elements 42 (which are also integrated in the mounting element 37 itself), which are arranged between the outlet mouths 23 of the suction pipes 9 and which are coupled to the body 21 of the suction manifold 4 to keep the shaft 18 of the choking system 15 in position. In other words, when mounting the suction manifold 4, the shaft 18 of the choking system 15 supporting and integrating the four choking elements 17 is inserted into the body 21 of the suction manifold 4 so as to arrange the choking elements 17 into the corresponding suction pipes 9; the mounting element 37 is then coupled to the body 21 of the suction manifold 4 at the outlet mouths 23 of the suction pipes 9 by arranging the elements 42 over corresponding portions of the shaft 18 and thus defining closed seats in which the shaft 18 may freely rotate about the rotation axis 20 but may not perform any translation.

According to a preferred embodiment, the mounting element 37 is jointly fixed to the connecting flange 24 of the body 21; in other words, the connecting flange displays a seat 43 which negatively reproduces the shape of the mounting element 37. Once the mounting element 37 is inserted into the seat 43 of the connecting flange 24, the mounting element 37 is sandwiched between the connecting flange 24 and the head 2 of the internal combustion engine 1 as the body 21 of the suction manifold 4 is fixed to the head 2 of the internal combustion engine 1.

According to a preferred embodiment shown in the accompanying figures, the connecting flange 24 of the body 21 displays a number of through holes 44 which are crossed by corresponding fastening screws 29 which are fastened into the head 2 of the internal combustion engine 1; the mounting element 37 displays a number of through holes 45 coaxially arranged to the through holes 44.

As shown in figure 7, the shaft 18 of the choking system 15 is provided with a toothed wheel 46 arranged at one end of the shaft 18 itself; the actuator device 19 displays a movable rod 47, which is linearly movable and is provided with a rack 48 which meshes with the toothed wheel 46 of the shaft 18 of the choking system 15.

According to a preferred embodiment shown in figure 7, the toothed wheel 46 of the shaft 18 of the choking system 15 displays an annular groove 49 in which the movable rod 47 of the actuator deice 19 is inserted to make an axial containment of the shaft 18. In this manner, the fastening of the shaft 18 of the choking system 15 is greatly simplified, because the presence of an end thrust bearing is no longer required to provide the axial containment to the shaft 18; furthermore the insertion of the movable rod 47 of the actuator device 19 into the annular groove 49 of the toothed wheel 46 of the shaft 18 of the choking system 15 allows to simply and rapidly reset and compensate for all axial constructive tolerances of the various components.

Preferably, the actuator device 19 is of the pneumatic type and comprises an actuating chamber 50 delimited on one side by a flexible membrane 51 which is mechanically connected to the movable rod 47, a three-way solenoid valve 52 for connecting the actuating chamber 50 to a suction source 53 for deforming the flexible membrane 51 and thus biasing the movable rod 47 towards a first stroke end, and a spring 54 which is mechanically coupled to a movable rod 47 to bias the movable rod 47 towards a second stroke end opposite to the first stroke end. According to a possible embodiment shown in figure 7, the three-way solenoid valve 52 connects the actuating chamber 50 to a suction source 53 (i.e. is opened to depressurize the actuating chamber 50) and thus the spring 54 is arranged inside the actuating chamber 50 for biasing the flexible membrane 51 outwards from the actuating chamber 50 itself; according to an alternative embodiment (not shown), the three-way solenoid valve 52 connects the actuating chamber 50 to a compression source 53 (i.e. is opened to pressurize the actuating chamber 50) and thus the spring 54 is arranged outside the actuating chamber 50 to bias the flexible membrane 51 inwards of the actuating chamber 50 itself.

According to the embodiment shown in figure 7, a containing shell 55 is provided, which is pneumatically insulated from the external environment and accommodates both the toothed wheel 46 of the shaft 18 of the choking system 15 and at least a part of the actuator device 19; in this embodiment, the solenoid valve 52 of the actuator device 19 alternatively connects the actuating chamber 50 to the suction chamber 22 and to either the suction or compression source 53. In this embodiment, the shaft 18 of the choking system 15 is free from seals and therefore the containing seal 55 is pneumatically connected to the suction pipes 9 and thus to the suction chamber 22; such a feature is advantageous because coupling a seal to the shaft 18 is relatively complex, as the shaft 18 must be free to rotate about the rotation axis 20.

According to an alternative embodiment (not shown), the shaft 18 of the choking system 15 is provided with a seal arranged upstream of the toothed wheel 46 for sealing the containing shell 55 of the suction pipes 9; in this embodiment, the solenoid valve 52 of the actuator device 19 alternatively connects the actuating chamber 50 to the external environment and to either the suction or compression source 53.

The above-described suction manifold 4 is particularly easy and cost-effective to be manufactured because the mechanical connection of the fuel common rail 13 to the body 21 is jointly made by only inserting the fuel common rail 13 into the housing seat 33 defined between the supporting cradles 32 and the fastening brackets 26. Accordingly, the fuel common rail 13 is free from the fastening flange 24 which is typically welded to the tube 30 and therefore the manufacturing cost of the fuel common rail 13 is considerably reduced.

The above-described suction manifold 4 is particularly simple and cost-effective to be assembled because coupling the mounting element 37 (integrating the seals 38 and 39 and the retaining elements 42 of the shaft 18 of the choking system 15) is simple and fast and may be easily automated (i.e. performed by a machine tool without any manual intervention by an operator).

The above-described suction manifold 4 is particularly simple and cost-effective to be assembled because coupling the movable rod 47 of the actuator device 19 to the shaft 18 of the choking device 15 is extremely simple and fast, so as to be able to transmit the motion generated by the actuator device 19 to the shaft 18.

## Claims

1. An integrated suction manifold (4) for an internal combustion engine (1) provided with a head (2) in which a number of cylinders (3) are obtained; the suction manifold (4) comprises:
a body (21) of the suction manifold (4) in which a suction chamber (22), which receives fresh air from the external environment, and a number of suction pipes (9), each of which connects the suction chamber (22) to a corresponding cylinder (3) of the internal combustion engine (1), are defined;
a plurality of fastening brackets (26), each of which rises from a wall (25) of the body (21) of the suction manifold (4) and displays a first through hole (28);
a plurality of fastening screws (29), each of which is arranged through the first through hole (28) of a fastening bracket (26) and is adapted to be screwed into the head (2) of the internal combustion engine (1) to fix the body (21) of the suction manifold (4) to the head (2); and
a fuel common rail (13) which is supported by the body (21) of the suction manifold (4) and displays a cylindrical tube (30) from which a number of cups (31) rise, each of which is adapted to be coupled to a fuel injector (14) of the internal combustion engine (1);
the suction manifold (4) is **characterized in that** it comprises a number of supporting cradles (32), which rise from the wall (25) of the body (21) of the suction manifold (4) and are arranged by the side of the fastening brackets (26) to define a housing seat (33), along with the fastening brackets (26) themselves, adapted to contain the fuel common rail (13) which is arranged between the fastening brackets (26) and the supporting cradles (32).

2. A suction manifold (4) according to claim 1, wherein the first through holes (28) of the fastening brackets (26) are spaced from the wall (25) of the body (21) of the suction manifold (4) so that the fuel common rail (13) is secured between the wall (25) of the body (21) of the suction manifold (4) and the fastening screws (29).

3. A suction manifold (4) according to claim 2, wherein the fastening brackets (26) are arranged between the cups (31) of the fuel common rail (13).

4. A suction manifold (4) according to claim 2, wherein the fastening brackets (26) are arranged at the cups (31) of the fuel common rail (13); each fastening bracket (26) displays a second through hole (27), which is arranged between the wall (25) of the body (21) of the suction manifold (4) and the first through hole (28) and is adapted to contain a cup (31) of the fuel common rail (13).

5. A suction manifold (4) according to anyone of the claims from 1 to 4, wherein the body (21) of the suction manifold (4) is made of molded plastic material; the first through hole (28) of each fastening bracket (26) is coated by a metal anti-collapsing bushing (34).

6. A suction manifold (4) according to anyone of the claims from 1 to 5, wherein the first through hole (28) of each fastening bracket (26) is coated by a metal anti-collapsing bushing (34), which protrudes from the first through hole (28) and extends outside the first through hole (28) towards the supporting cradle (32).

7. A suction manifold (4) according to claim 6, wherein the metal anti-collapsing bushing (34) of each fastening bracket (26) has an "L"-shape and is provided with an elbow extension (35) arranged parallel to and facing the supporting cradle (32) in order to contribute to form the housing seat (33) adapted to contain the common rail (13).

8. A suction manifold (4) according to claim 6 or 7, wherein each fastening bracket (26) displays a tubular extension (36), which is coaxially arranged to the first through hole (28) and forms an extension (35) of the first through hole (28) on the side opposite to the supporting cradle (32).

## Amended claims

### Amended claims in accordance with Rule 137(2) EPC.

**1.** An integrated suction manifold (4) for an internal combustion engine (1) provided with a head (2) in which a number of cylinders (3) are obtained; the suction manifold (4) comprises:
a body (21) of the suction manifold (4) in which a suction chamber (22), which receives fresh air from the external environment, and a number of suction pipes (9), each of which connects the suction chamber (22) to a corresponding cylinder (3) of the internal combustion engine (1), are defined;
a plurality of fastening brackets (26), each of which rises from a wall (25) of the body (21) of the suction manifold (4) and displays a first through hole (28);
a plurality of fastening screws (29), each of which is arranged through the first through hole (28) of a fastening bracket (26) and is adapted to be screwed into the head (2) of the internal combustion engine (1) to fix the body (21) of the suction manifold (4) to the head (2);
a fuel common rail (13) which is supported by the body (21) of the suction manifold (4) and displays a cylindrical tube (30) from which a number of cups (31) rise, each of which is adapted to be coupled to a fuel injector (14) of the internal combustion engine (1); and
a number of supporting cradles (32), which rise from the wall (25) of the body (21) of the suction manifold (4) and are arranged by the side of the fastening brackets (26) to define a housing seat (33), along with the fastening brackets (26) themselves, adapted to contain the fuel common rail (13) which is arranged between the fastening brackets (26) and the supporting cradles (32).
the suction manifold (4) is **characterized in that** the first through hole (28) of each fastening bracket (26) is coated by a metal anti-collapsing bushing (34), which protrudes from the first through hole (28), extends outside the first through hole (28) towards the supporting cradle (32), has an "L"-shape, and is provided with an elbow extension (35) arranged parallel to and facing the supporting cradle (32) in order to contribute to form the housing seat (33) adapted to contain the common rail (13).

**2.** A suction manifold (4) according to claim 1, wherein the first through holes (28) of the fastening brackets (26) are spaced from the wall (25) of the body (21) of the suction manifold (4) so that the fuel common rail (13) is secured between the wall (25) of the body (21) of the suction manifold (4) and the fastening screws (29).

**3.** A suction manifold (4) according to claim 2, wherein the fastening brackets (26) are arranged between the cups (31) of the fuel common rail (13).

**4.** A suction manifold (4) according to claim 2, wherein the fastening brackets (26) are arranged at the cups (31) of the fuel common rail (13) ; each fastening bracket (26) displays a second through hole (27), which is arranged between the wall (25) of the body (21) of the suction manifold (4) and the first through hole (28) and is adapted to contain a cup (31) of the fuel common rail (13).

**5.** A suction manifold (4) according to anyone of the claims from 1 to 4, wherein the body (21) of the suction manifold (4) is made of molded plastic material.

**6.** A suction manifold (4) according to anyone of the claims from 1 to 5, wherein each fastening bracket (26) displays a tubular extension (36), which is coaxially arranged to the first through hole (28) and forms an extension (35) of the first through hole (28) on the side opposite to the supporting cradle (32).
